# EUROPÄISCHE PATENTSCHRIFT

(11) **EP 3 117 741 B1**
(45) Veröffentlichungstag und Bekanntmachung des Hinweises auf die Patenterteilung: **17.10.2018**
(21) Anmeldenummer: 16179359.1
(22) Anmeldetag: 13.07.2016
(51) Int. Cl.: A47B 47/04, A47B 87/02, F16B 12/12, F16B 12/46

(54) **REGALSYSTEM MIT STECKVERBINDUNG**
SHELVING SYSTEM WITH A PLUG-IN CONNECTION
SYSTEME D'ETAGERE COMPRENANT UN CONNECTEUR A FICHES

(30) Priorität: 17.07.2015 DE 102015111649
(43) Veröffentlichungstag der Anmeldung: 18.01.2017
(73) Patentinhaber: pro.fund GmbH, 13086 Berlin (DE)
(72) Erfinder: Baumhoff, Mirco, 10961 Berlin (DE)
(74) Vertreter: PATERIS Patentanwälte PartmbB

(56) Entgegenhaltungen:
- WO-A1-2015/040641
- DE-U1-202014 002 101
- US-A- 4 145 977
- US-B2- 6 675 979

## Beschreibung

Die vorliegende Erfindung betrifft ein Regalsystem mit Steckverbindung, welches Bodenelemente und Wandelemente aufweist.

Regelsysteme mit Steckverbindungen sind beispielsweise aus GB 1 280 157, FR 2 974 604, US 2003/0070381 A1, NL 1025719 und CN 203208691 U bekannt. All diesen Regelsystemen ist gemeinsam, dass Regalelemente vorhanden sind, die hakenartige Vorsprünge aufweisen, welche in Schlitze von anderen Regalelementen eingeführt werden. Nach dem Einführen werden die Regalelemente mit den hakenartigen Vorsprüngen in Längsrichtung der Schlitze verschoben, um die Verbindung herzustellen.

Die US 4,145,977 beschreibt ein modulares Regalsystem mit Regalböden und Säulenmodulen. Die Säulenmodule weisen an einer Seite Schnappvorsprünge und an der anderen Seite eine Aufnahme für die Schnappvorsprünge auf, wobei die Aufnahme mit Rastvorsprüngen versehen ist, in welche die Schnappvorsprünge einrasten können.

Die DE 20 2014 002 101 U1 beschreibt eine Verbindung zwischen einem Boden und vertikal zugeordneten Trägerelementen von Verkaufsaufstellern. Die Trägerelemente weisen einen Zapfen bzw. eine Aufnahme für den Zapfen auf. Die Bodenelemente weisen eine Öffnung auf, deren Breite es ermöglicht, die Wandelemente nebeneinander in das Bodenelement einzuführen und dann entlang der Breitenausdehnung des Bodenelementes zu verschieben, um den Zapfen in die Aufnahme einzuführen. Schließlich wird die Verbindung mit Hilfe eines in die Öffnung eingeführten Stanz-teils gesichert.

Die US 6,675,979 B2 beschreibt ein Regalsystem mit hakenartigen Vorsprüngen, die durch Öffnungen von Bodenelementen hindurchgeführt werden und die mit entsprechenden Hakenelementen eines anderen Wandelementes in Eingriff kommen. Zum Herbeiführen eines Formschlusses kommen Steckelemente zur Anwendung, die zwischen die hakenartigen Vorsprünge eingeschoben werden, wenn diese durch Schlitze in Bodenelementen hindurchgeführt und miteinander in Eingriff gebracht sind.

Die WO 2015/040641 A1 beschreibt einen Verbinder für eine rechtwinklige Verbindung zweier hölzerner Bretter.

Darüber hinaus sind beispielsweise aus "www.ponsold.com/zirbe3.html" Holzbetten bekannt, bei denen flächige Elemente jeweils an einer Kante mit einer Fase versehen sind, wobei innerhalb der Fläche der flächigen Elemente hakenartige Vorsprünge über die Fase vorstehen. Zwei flächige Elemente können miteinander verbunden werden, indem die hakenartigen Vorsprünge eines ersten flächigen Elementes mit hakenartigen Vorsprüngen eines zu dem ersten flächigen Element senkrecht angeordneten zweiten flächigen Elementes in Eingriff gebracht werden. Die hakenartigen Vorsprünge der flächigen Elemente begrenzen dabei in der Fläche des jeweiligen flächigen Elementes Schlitze für die Haken eines anderen flächigen Elementes.

Gegenüber dem genannten Stand der Technik ist es Aufgabe der vorliegenden Erfindung ein vorteilhaftes Regalsystem mit Steckverbindung zur Verfügung zu stellen. Diese Aufgabe wird durch ein Regalsystem nach Anspruch 1 gelöst. Die abhängigen Ansprüche enthalten vorteilhafte Ausgestaltungen des erfindungsgemäßen Regalsystems.

Ein erfindungsgemäßes Regalsystem mit Steckverbindung umfasst Bodenelemente und Wandelemente. Die Bodenelemente weisen jeweils eine Breitenausdehnung entlang einer Breiterichtung und eine Tiefenausdehnung entlang einer zur Breiterichtung senkrecht verlaufenden Tiefenrichtung auf.

Außerdem weisen die Bodenelemente jeweils wenigstens zwei Durchgangsöffnungen mit einer sich mit Breitenrichtung des jeweiligen Bodenelements erstreckenden Öffnungsbreite und einer sich in Tiefenrichtung des jeweiligen Bodenelements erstreckenden Öffnungslänge auf. Diese Durchgangsöffnungen sind in Breiterichtung des jeweiligen Bodenelementes voneinander beabstandet. Die Wandelemente weisen jeweils eine Höhenausdehnung entlang einer Höhenrichtung, eine Tiefenausdehnung entlang einer zur Höhenrichtung senkrechten Tiefenrichtung und eine Breitenausdehnung entlang einer zur Höhenrichtung und zur Tiefenrichtung senkrechten Breitenrichtung auf. Jeweils an zwei in Höhenrichtung entgegengesetzten Enden eines Wandelementes befinden sich Endflächen. Die Endflächen jedes Wandelements weisen hakenartige Vorsprünge auf, die über die jeweilige Endfläche vorstehen und deren Hakenform in einer durch die Höhenrichtung und die Tiefenrichtung des jeweiligen Wandelements definierten Ebene gegeben ist. Die Ausdehnung der hakenartigen Vorsprünge in Tiefenrichtung des jeweiligen Wandelements entspricht höchstens dem Abstand zwischen zwei hakenartigen Vorsprüngen. Die hakenartigen Vorsprünge sind derart an den Endflächen angeordnet, dass die hakenartigen Vorsprünge einander gegenüberliegender Endflächen zweier Wandelemente formschlüssig miteinander in Eingriff bar sind. Die Endflächen der Wandelemente weisen in Tiefenrichtung des jeweiligen Wandelements eine Ausdehnung auf, die größer als die Öffnungslänge der Durchgangsöffnungen ist, wobei die hakenartigen Vorsprünge von den in Tiefenrichtung gesehenen Enden der Endfläche des jeweiligen Wandelements beabstandet sind. Die Ausdehnung jedes der hakenartigen Vorsprünge in Tiefenrichtung des jeweiligen Wandelementes entspricht jeweils im Wesentlichen dem Abstand zwischen zwei hakenartigen Vorsprüngen in Tiefenrichtung des jeweiligen Wandelementes entspricht, und die Ausdehnung der hakenartigen Vorsprünge in Breitenrichtung des jeweiligen Wandelements entspricht der Öffnungsbreite der Durchgangsöffnungen der Bodenelemente entspricht.

Das erfindungsgemäße Regalsystem ermöglicht eine einfach herzustellende und dennoch stabile Steckverbindung bei einer insgesamt geringen Anzahl an unterschiedlichen Elementen. Die geringe Anzahl an unterschiedlichen Elementen ermöglicht dabei eine einfache und kostengünstige Massenproduktion des Regalsystems. Gleichzeitig wird eine einfach aufzubauende und stabile Steckverbindung ermöglicht. Zum Herstellen der Verbindung werden zwei Wandelemente mit ihren hakenartigen Vorsprüngen aus entgegengesetzten Richtungen in eine Durchgangsöffnung eines Bodenelementes eingeführt. Durch gegenläufiges Verschieben der Wandelemente relativ zueinander entlang der Tiefenrichtung werden dann ihre hakenartigen Vorsprünge miteinander in formschlüssigen Eingriff gebracht. Die Verbindung entsteht also im Wesentlichen durch den Eingriff der hakenartigen Elemente eines Wandelementes in die hakenartigen Elemente eines anderen Wandelementes. Im Stand der Technik werden hakenartige Vorsprünge dagegen mit Schlitzen in Eingriff gebracht, die in zu den hakenartigen Vorsprüngen senkrecht verlaufenden Flächen vorhanden sind. Wenn nun an beiden gegenüberliegenden Seiten eines mit solchen Schlitzen versehenden Elementes Steckverbindungen hergestellt werden sollen, muss dieses Element an beiden Seiten Schlitze aufweisen, die entweder versetzt sein müssen, damit sich die hakenartigen Vorsprünge nicht gegenseitig stören, oder die hakenartigen Vorsprünge müssen entsprechend geringere Abmessungen aufweisen, wenn die Schlitze einander gegenüberliegen. Im ersten Fall sind Elemente notwendig, deren hakenartigen Vorsprünge an unterschiedlichen Positionen angebracht sind, so dass die Zahl der notwendigen Elemente erhöht wird. Im zweiten Fall sind die Abmessungen der hakenartigen Vorsprünge dadurch begrenzt, dass sich die in einander gegenüberliegenden Schlitze eingeführten hakenartigen Vorsprünge nicht gegenseitig behindern dürfen. Die hakenartigen Vorsprünge müssen daher relativ klein ausgebildet sein.

Im Unterschied dazu ermöglicht die vorliegende Erfindung hakenartige Vorsprünge, die der gesamten Dicke eines Bodenelements entsprechen können, wobei die Wandelemente symmetrisch ausgebildet sein können. Auf diese Weises kann mit einer geringstmöglichen Anzahl an unterschiedlichen Elementen aufgrund der großen möglichen Abmessung der hakenartigen Vorsprünge eine stabile Steckverbindung erzielt werden.

In einer Weiterbildung des erfindungsgemäßen Regalsystems umfasst dieses außer den Wandelementen auch Wandendelemente, die jeweils eine Höhenausdehnung entlang einer Höhenrichtung, eine Tiefenausdehnung entlang einer zur Höhenrichtung senkrechten Tiefenrichtung und eine Breitenausdehnung entlang einer zur Höhenrichtung und zur Tiefenrichtung senkrechten Breitenrichtung besitzen und die jeweils zwei an in Höhenrichtung entgegengesetzten Enden gelegene Endflächen aufweisen. Im Unterschied zu den Wandelementen weist bei den Wandendelementen lediglich eine der Endflächen jedes Wandendelements hakenartige Vorsprünge auf, deren Hakenform in einer durch die Höhenrichtung und die Tiefenrichtung des jeweiligen Wandendelements definierten Ebene gegeben ist und deren Ausdehnung in Tiefenrichtung des jeweiligen Wandendelements höchstens dem Abstand zwischen zwei hakenartigen Vorsprüngen entspricht. Während die Wandelemente zum Aufbau des Regalkörpers dienen, können die Wandendelemente beispielsweise als Fußelemente dienen, auf denen das fertige Regal ruht. Zudem können Wandendelemente als obere Abschlusselemente der Regalwände herangezogen werden.

Die Tiefenausdehnung der Wandendelemente ist vorteilhafterweise größer als die Öffnungslänge der Durchgangsöffnungen, wobei die hakenartigen Vorsprünge von den Enden. des Wandendelements in Tiefenrichtung gesehen beabstandet sind. Dabei kann die Ausdehnung der hakenartigen Vorsprünge in Tiefenrichtung des jeweiligen Wandendelements dem Abstand zwischen zwei hakenartigen Vorsprüngen in Tiefenrichtung des jeweiligen Wandendelements entsprechen. Auf diese Weise lässt sich entlang der Tiefenrichtung der Endflächen die größtmögliche Anzahl an hakenartigen Vorsprüngen zur Verfügung stellen, was zur Erhöhung der Stabilität der Steckverbindung beitertragen kann.

Zusätzlich oder alternativ ist die Breitenausdehnung der Wandelemente und/oder die Breitenausdehnung der Wandendelemente vorteilhafterweise größer als die Öffnungsbreite der Durchgangsöffnung. Auf diese Weise kommt ein Abschnitt der jeweiligen mit den hakenartigen Vorsprüngen versehenen Endfläche an der Oberfläche desjenigen Bodenelements, in dessen Durchgangsöffnung die hakenartigen Vorsprünge eingeführt werden, zur Anlage. Dadurch werden die Wandelemente gegen ein Verkippen gesichert und so die Stabilität der Steckverbindung erhöht.

Außerdem kann bzw. können in dem erfindungsgemäßen Regalsystem die Ausdehnung der hakenartigen Vorsprünge in Breitenrichtung des jeweiligen Wandelementes kleiner als die Breitenausdehnung des jeweiligen Wandelements bzw. des jeweiligen Wandendelements sein. Insbesondere ist es dabei vorteilhaft, dass die Ausdehnung der hakenartigen Vorsprünge in Breitenrichtung des jeweiligen Wandelements bzw. des jeweiligen Wandendelements der Öffnungsbreite der Durchgangsöffnungen des jeweiligen Bodenelementes entspricht. Auch durch diese Maßnahme können die Wandelemente gegen ein Verkippen gesichert werden, so dass diese Maßnahme zur Stabilität der Steckverbindung beitragen kann. Außerdem verhindert diese Maßnahme, dass sich die Wandelemente bzw. die Wandendelemente in Breitenrichtung des Bodenelementes verschieben können, was ebenfalls die Stabilität der Steckverbindung erhöht.

Die Wandelemente und/oder die Wandendelemente des erfindungsgemäßen Regalsystems können bezüglich einer durch die Höhenrichtung und die Tiefenrichtung des jeweiligen Wandelements bzw. des jeweiligen Wandendelements definierten Ebene symmetrisch ausgebildet sein. Außerdem können die Wandelemente bezüglich einer durch die Tiefenrichtung und die Breitenrichtung des jeweiligen Wandelementes definierten Ebene symmetrisch ausgebildet sein. Auf diese Weise lässt sich die Anzahl der mindestens benötigen unterschiedlichen Elemente so gering wie möglich halten.

Im erfindungsgemäßen Regalsystem weisen die Bodenelemente jeweils eine Dicke in einer zur Breitenrichtung und zur Tiefenrichtung des jeweiligen Bodenelements senkrecht verlaufenden Höhenrichtung auf. Die Ausdehnung der hakenartigen Vorsprünge entlang der Höhenrichtung der Wandelemente bzw. der Wandendelemente kann dann der Dicke der Bodenelemente entsprechen. Dadurch können besonders große Haken für die Steckverbindung realisiert werden.

Vorteilhafterweise können die hakenartigen Vorsprünge der Wandelemente und/oder die hakenartigen Vorsprünge der Wandendelemente jeweils einen von der jeweiligen Endfläche ausgehenden ersten Hakenabschnitt sowie einen rechtwinklig zum ersten Hakenabschnitt verlaufenden und sich an den ersten Hakenabschnitt in Höhenrichtung des jeweiligen Wandelements bzw. des jeweiligen Wandendelementes anschließenden zweiten Hakenabschnitt aufweisen, wobei der zweite Hakenabschnitt eine Ausdehnung in Höhenrichtung des jeweiligen Wandelementes bzw. des jeweiligen Wandendelements aufweist, die dem Abstand des zweiten Hakenabschnitts von der Endfläche des jeweiligen Wandelements bzw. des jeweiligen Wandendelements entspricht. Auf diese Weise können die zweiten Hakenabschnitte der hakenartigen Vorsprünge eines Wandelements oder eines Wandendelements in die Zwischenräume zwischen den zweiten Hakenabschnitten und den Endflächen eines anderen Wandelements bzw. Wandendelements passgenau eingreifen, was ebenfalls zur Stabilität der Steckverbindung beiträgt. Hierbei ist es besonders vorteilhaft, wenn die Ausdehnung des zweiten Hakenabschnittes in Tiefenrichtung des jeweiligen Wandelements bzw. des jeweiligen Wandendelements dem doppelten der Ausdehnung des ersten Hakenabschnittes in Tiefenrichtung des jeweiligen Wandelementes bzw. in Tiefenrichtung des jeweiligen Wandendelements entspricht, so dass der Zwischenraum zwischen einem zweiten Hakenabschnitt und der Endfläche des jeweiligen Wandelementes bzw. des jeweiligen Wandendelements vollständig mit einem Abschnitt des zweiten Hakenabschnittes ausgefüllt werden, was auch zur Stabilität der Steckverbindung beiträgt.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.
- Figur 1: zeigt ein mittels des erfindungsgemäßen Regalsystems aufgebautes Regal.
- Figur 2: zeigt ein Bodenelement des Regalsystems in Draufsicht.
- Figur 3: zeigt ein Bodenelement des Regalsystems in einem Schnitt entlang der Linie III-III in Fig. 2.
- Figur 4: zeigt ein Wandelement des Regalsystems in einer ersten Seitenansicht.
- Figur 5: zeigt das Wandelement aus Fig. 4 in einer zweiten Seitenansicht.
- Figur 6: zeigt ein Wandendelement des Regalsystems in einer Seitenansicht.
- Figur 7: zeigt ein Detail des zusammengebauten Regalsystems.

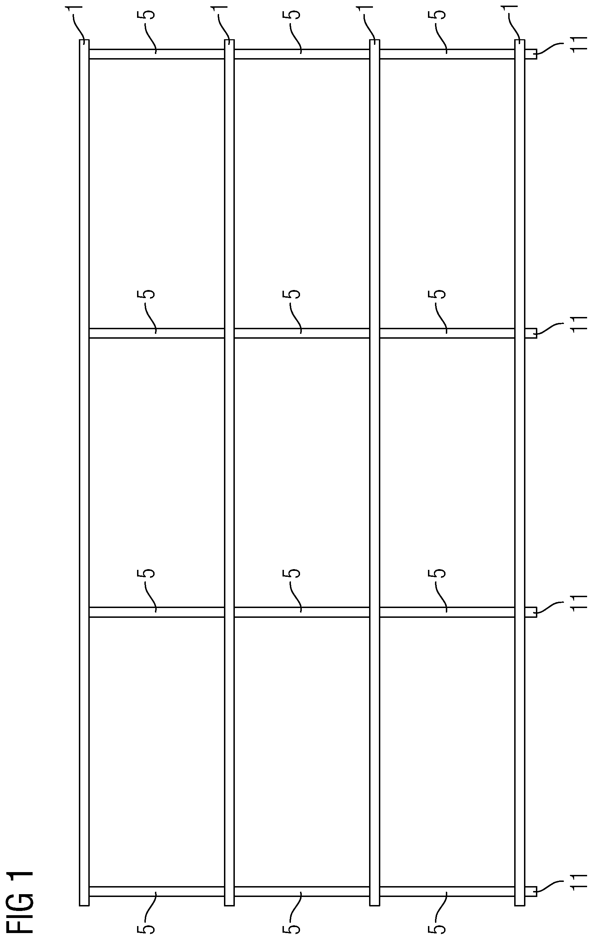

Ein Ausführungsbeispiel für das erfindungsgemäße Regalsystem wird nachfolgend mit Bezug auf die Figuren 1 bis 7 beschrieben, wobei Fig. 1 ein aus Bodenelementen 1, aus Wandelementen 5 und aus Wandendelementen 11 des erfindungsgemäßen Regalsystems zusammengesetztes Regal zeigt. Das Regal ist mit Hilfe eines Stecksystems zusammengesetzt, welches hakenartige Vorsprünge an Endflächen der Wandelemente und der Wandendelemente aufweist. Die Bodenelemente, die Wandelemente und die Wandendelemente werden nachfolgend näher beschrieben.

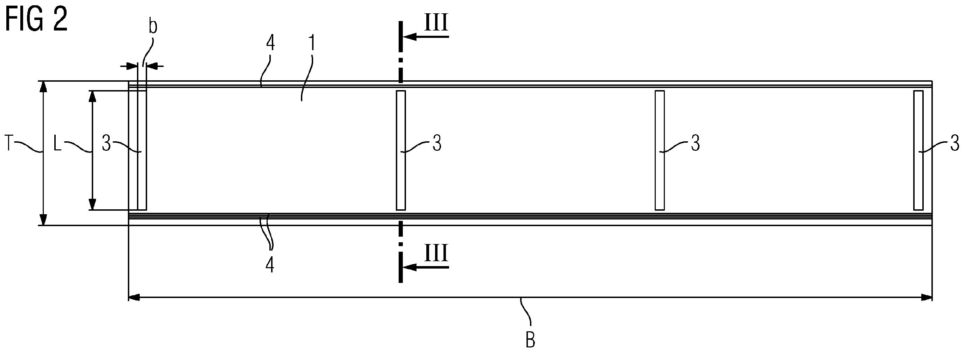

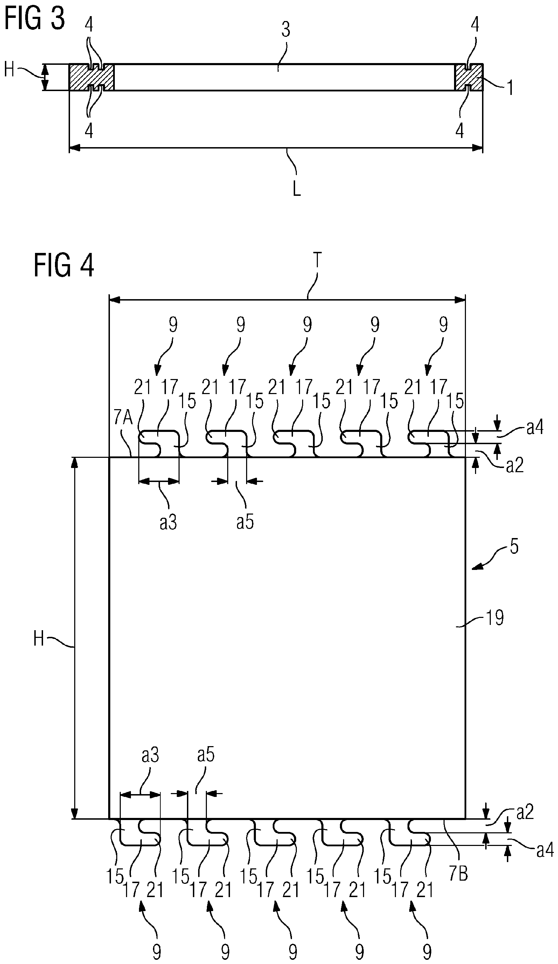

Ein Beispiel für ein Bodenelement 1 ist in den Figuren 2 und 3 dargestellt. Während Figur 2 eine Draufsicht auf das Bodenelement 1 zeigt, zeigt Figur 3 einen Schnitt durch das Bodenelement entlang der Linie III-III.

Das Bodenelement weist entlang einer Breitenrichtung B eine Breitenausdehnung, entlang einer Tiefenrichtung T eine Tiefenausdehnung und entlang einer Höhenrichtung H eine Höhenausdehnung auf. In gleichmäßigen Abständen sind im Bodenelement 1 Durchgangsöffnungen 3 vorhanden, die jeweils eine Öffnungslänge I und eine Öffnungsbreite B aufweisen, wobei die Öffnungslänge I entlang der Tiefenrichtung T und die Öffnungsbreite b entlang der Breitenrichtung B des Bodenelements 1 definiert ist. Im vorliegenden Ausführungsbeispiel weist das Bodenelement 1 vier Durchgangsöffnungen 3 auf. Es kann jedoch auch eine andere Zahl von Durchgangsöffnungen 3 aufweisen, wobei sinnvollerweise wenigstens zwei Durchgangsöffnungen 3 vorhanden sind.

Darüber hinaus weist das Bodenelement Nuten 4 auf, die sich über die gesamte Breite des Bodenelements erstrecken und zur Aufnahme etwaiger Rückwände oder verschiebbare Türelemente dienen. Diese Nuten 4 befinden sich in einem Abschnitt des Bodenelements 1, in den sich die Durchgangsöffnungen 3 nicht hinein erstrecken.

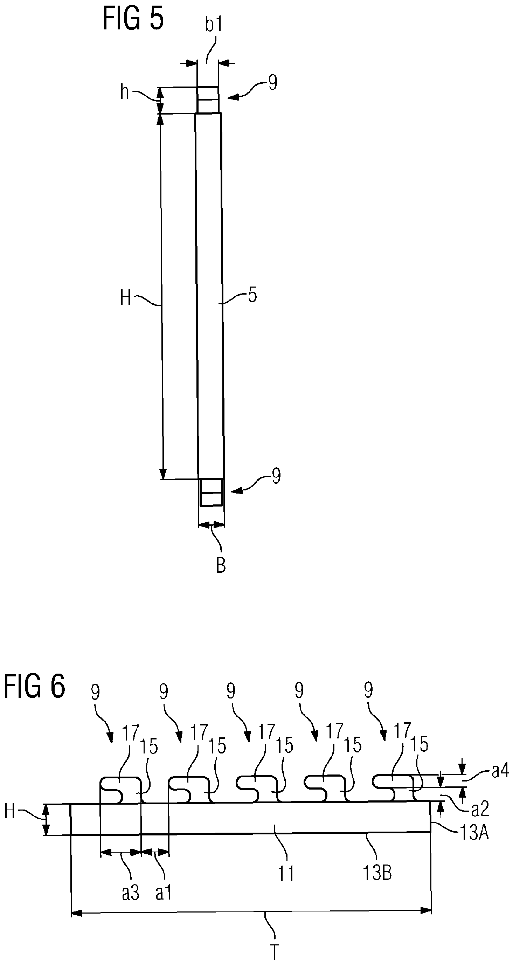

Ein Beispiel für ein Wandelement des erfindungsgemäßen Regalsystems ist in den Figuren 4 und 5 gezeigt, wobei die Figuren 4 und 5 verschiedene Seitenansichten des Wandelements 5 zeigen.

Das Wandelement 5 weist eine Höhenausdehnung entlang einer Höhenrichtung H, eine Tiefenausdehnung entlang einer Tiefenrichtung T und eine Breitenausdehnung entlang einer Breitenrichtung B auf. Es besteht aus einem Grundkörper 19 der im vorliegenden Ausführungsbeispiel in einer durch die Höhenrichtung H und die Tiefenrichtung T definierten Ebene eine quadratische Fläche aufweist. Diese Fläche kann jedoch auch rechteckig sein, wenn die Ausdehnung des Grundkörpers 19 in Höhenrichtung größer als die Ausdehnung in Tiefenrichtung ist oder wenn die Ausdehnung in Höhenrichtung geringer als seine Ausrichtung in Tiefendichtung ist. Durch die Abmessungen des Grundkörpers 19 werden die Abmessungen der Regalfächer eines unter Verwendung der entsprechenden Wandelemente 5 aufgebauten Regals festgelegt.

An in Höhenrichtung H entgegengesetzt gelegenen Endflächen 7A, 7B des Grundkörpers 19 des Wandelements 5 befinden sich hakenartige Vorsprünge 9, die in einer durch die Höhenrichtung H und die Tiefenrichtung T definierten Ebene eine Hakenform aufweisen. Jeder hakenartige Vorsprung 9 besteht aus einem sich an die jeweilige Endfläche 7A, 7B anschließenden ersten Hakenabschnitt 15 und einem vom ersten Hakenabschnitt 15 rechtwinklig abgewinkelten zweiten Hakenabschnitt 17. Der Abstand a2 der zweiten Hakenabschnitte 17 von der jeweiligen Endfläche 7A, 7B entspricht dabei im Wesentlichen der Abmessung a4 des zweiten Hakenabschnitts 17 in Höhenrichtung H des Wandelements 5. Die Abmessung a3 des zweiten Hakenabschnittes 17 in Tiefenrichtung des Wandelements 5 entspricht etwa dem doppelten der Abmessung a5 des ersten Hakenabschnitts 15 in Tiefenrichtung des Wandelements. Weiterhin entspricht im vorliegenden Ausführungsbeispiel der Abstand a1 in Tiefenrichtung des Wandelements 15 zwischen den einzelnen hakenförmigen Abschnitten 9 im Wesentlichen der Ausdehnung a3 der zweiten Hakenabschnitte 17. Sofern im Rahmen der vorliegenden Beschreibung erwähnt ist, dass ein Abstand oder eine Abmessung im Wesentlichen einem anderen Abstand oder einer anderen Abmessung entspricht, soll darunter nicht zu verstehen sein, dass die Abmessungen bzw. Abstände exakt identisch sind. Vielmehr können diese um bis zu 20% voneinander abweichen, bspw. um ein Einführen des zweiten Hakenabschnitts 17 eines hakenartigen Vorsprungs 9 in die zwischen dem zweiten Hakenabschnitt 17 eines anderen hakenartigen Vorsprungs 9 und einer Endfläche 7A, 7B gebildete Aussparung zu erleichtern. Abweichungen von der Identität zwischen den Abmessungen bzw. Abständen mit Abweichungen voneinander bis zu 20% sollen daher immer noch im Sinne der vorliegenden Erfindung als im Wesentlichen gleich angesehen werden. Ebenfalls um das Einführen des zweiten Hakenabschnitts 17 eines hakenartigen Vorsprungs 9 in die zwischen dem zweiten Hakenabschnitt 17 eines anderen hakenartigen Vorsprungs 9 und einer Endfläche 7A, 7B geformte Aussparung zu erleichtern, können die freien Enden 21 der zweiten Hakenabschnitte 17 leicht abgerundet sein, wie dies in Figur 4 dargestellt ist.

Im vorliegenden Ausführungsbeispiel entspricht die Breite b1 der hakenartigen Vorsprünge 9 der Öffnungsbreite b der Durchgangsöffnungen 3 in den Bodenelementen 1. Hierbei ist zu betonen, dass die möglichen Abweichungen zwischen der Breite b1, der hakenartigen Vorsprünge 9 in Breitenrichtung des Wandelements 5 von der Öffnungsbreite b der Durchgangsöffnungen 3 im vorliegenden Ausführungsbeispiel nur geringfügig abweichen, d.h. weniger als 5%, damit ein Verschieben von in die Durchgangsöffnungen 3 eingeführten hakenartigen Vorsprüngen 9 in Breitenrichtung B des Bodenelementes 1 weitgehend vermieden werden kann. Die Höhe h der hakenartigen Vorsprünge 9 entspricht im Wesentlichen der Dicke der Bodenelemente 1, also deren Abmessung in Höhenrichtung H. Hierbei gilt wieder, dass Abweichungen der Höhenabmessung h der hakenartigen Vorsprünge 9 von der Dicke der Bodenelemente 1 noch als im Wesentlichen gleich mit der Dicke der Bodenelemente 1 angesehen werden sollen, wenn sie nicht mehr als 20% betragen.

Ein Beispiel für ein Wandendelement ist in Fig. 6 in einer Seitenansicht dargestellt. Das Wandendelement 11 entspricht in seinem grundsätzlichen Aufbau weitgehend dem mit Bezug auf die Figuren 4 und 5 beschriebenen Wandelement 5 mit der Ausnahme, dass lediglich eine seiner beiden in Höhenrichtung H gesehenen Endflächen 13A, 13B mit hakenartigen Vorsprüngen 9 versehen ist. Bzgl. des Wandendelements 11 konzentriert sich die vorliegende Beschreibung daher auf die Unterschiede zu den in den Figuren 4 und 5 dargestellten Wandelement. Merkmale und Eigenschaften des Wandendelements 11, die sich nicht von Merkmalen und Eigenschaften des Wandelements 5 unterscheiden, werden mit Bezug auf Fig. 6 nicht noch einmal erläutert, um Wiederholungen zu vermeiden. Merkmale, die Merkmalen aus den Figuren 4 und 5 entsprechen, sind zudem in Fig. 6 mit denselben Bezugsziffern wie in den Figuren 4 und 5 bezeichnet.

Im Unterschied zum Wandelement 5 weist das Wandendelement 11 einen ausgeprägt rechteckigen Grundkörper 23 auf. Im vorliegenden Ausführungsbeispiel entspricht die Ausdehnung des Grundkörpers 23 in Höhenrichtung H des Wandendelements 11 in etwa nur einem Zehntel seiner Ausdehnung in Tiefenrichtung T des Wandendelements 11. Es besteht jedoch grundsätzlich auch die Möglichkeit, die Ausdehnung des Grundkörpers 23 des Wandendelements in Höhenrichtung H zu vergrößern, so dass sich die Seitenlängen in Höhen- und Tiefenrichtung einander annähern. Bspw. kann der Grundkörper 23 des Wandendelements 11 auch die gleichen Seitenverhältnisse wie der Grundkörper 19 des Wandelements 5 aufweisen, so dass der Grundkörper 11 des Wandelements 5 und der Grundkörper 23 des Wandendelements 11 in einer durch die Höhenrichtung H und die Tiefenrichtung T definierten Ebene dieselbe Form aufweisen. Im vorliegenden Ausführungsbeispiel soll das Wandendelement 11 jedoch als Fußelement des Regals dienen (siehe Fig. 1), weswegen es eine im Vergleich zu seiner Tiefe sehr geringe Höhe aufweist.

Wie bereits erwähnt, weist beim Wandendelement 11 lediglich eine der Endflächen 13A, 13B hakenartige Vorsprünge auf. Die Ausgestaltung dieser hakenartigen Vorsprünge ist identisch mit der Ausgestaltung der hakenartigen Vorsprünge an den Endflächen 7A, 7B des Wandelements 5, so dass hierauf mit Bezug auf das Wandendelement 11 nicht weiter eingegangen wird.

Die nicht mit den hakenartigen Vorsprüngen 9 versehene Endfläche 13B des Wandendelements 11 ist im vorliegenden Ausführungsbeispiel eine ebene Fläche. Es besteht jedoch auch die Möglichkeit, verstellbare Füße an dieser Endfläche 13B anzubringen, so dass das Regal an seinem Aufstellungsort nivelliert werden kann.

Die Wandelemente 5 und die Wandendelemente 11 sind im vorliegenden Ausführungsbeispiel bezüglich einer durch die Höhenrichtung H und die Tiefenrichtung T des jeweiligen Wandelements 5 bzw. des jeweiligen Wandendelements 11 definierten Ebene symmetrisch ausgebildet. Dadurch können ihre hakenartigen Vorsprünge 9 mit den hakenartigen Vorsprüngen anderer Wandelements 5 bzw. anderer Wandendelements 11 in Eingriff gebracht werden, wenn sie bezüglich der andren Wandelemente 5 bzw. der andren Wandendelemente 11 um eine in Höhenrichtung H verlaufende Achse um 180 Grad gedreht sind.

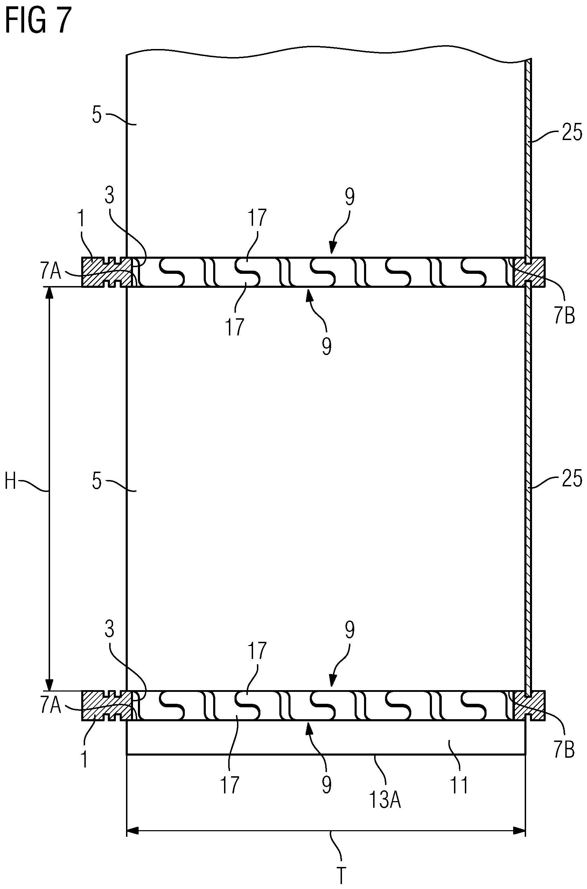

Die Art und Weise, wie das in Fig. 1 dargestellte Regal mittels einer Steckverbindung aus Bodenelementen 1, Wandelementen 5 und Wandendelementen 11 aufgebaut wird, ist in Fig. 7 dargestellt. Diese Figur zeigt einen Schnitt durch zwei Bodenelemente 1, in dem zu erkennen ist, wie die hakenartigen Vorsprünge 9 von aus entgegengesetzten Richtungen in die Öffnungen 3 der Bodenelemente 1 eingeführten Wandelementen 5 bzw. Wandendelementen 11 ineinander greifen um diese miteinander zu verbinden. Hierbei ist zu erkennen, dass die freien Enden der zweiten Hakenabschnitte 17 weitgehend spielfrei in die zwischen den zweiten Hakenabschnitten 17 und den jeweiligen Endflächen 7A, 7B, 13A gebildeten Aufnahmen eingreifen und so für eine Arretierung sorgen.

Zum Herstellen der Verbindung werden von beiden Seiten einer Durchgangsöffnung 3 die hakenartigen Vorsprünge zweier Wandelemente 5 oder die hakenartigen Vorsprünge eines Wandelements 5 und eines Wandendelements 11 entlang der Höhenrichtung H in die Durchgangsöffnung 3 eingeführt. Die beiden Wandelemente 5 bzw. das Wandelement 5 und das Wandendelement 11 sind dabei entlang der Tiefenrichtung relativ zueinander derart positioniert, dass sich die zweiten Hakenabschnitte 17 der jeweiligen hakenförmigen Vorsprünge 9 entlang der Höhenrichtung H passieren können. Aufgrund der Tatsache, dass die Endfläche in Tiefenrichtung und im vorliegenden Ausführungsbeispiel auch in der in Figur 7 nicht dargestellten Breitenrichtung B größere Abmessungen als die Öffnungslänge I bzw. die Öffnungsbreite b der Durchgangsöffnungen 3 aufweisen, schlagen die Endflächen 7A, 7B, 13A an der Oberfläche des Bodenelements 1 an, wenn die hakenartigen Vorsprünge 9 maximal in die Durchgangsöffnung 3 eingeführt sind. Wegen der beschriebenen Abmessungen der hakenartigen Vorsprünge 9 können die freien Enden der hakenartigen Vorsprünge 17 durch gegenläufiges Verschieben der Wandelemente 5 bzw. des Wandendelements 5 und des Bodenelements 11 entlang der Tiefenrichtung miteinander in Eingriff gebracht werden, um eine formschlüssige Verbindung zwischen den beiden Wandelementen 5 bzw. zwischen dem Wandelement 5 und dem Wandendelement 11 herzustellen. Aufgrund der geschilderten Abmessungen kann erreicht werden, dass die Reibung zwischen den einzelnen hakenartigen Abschnitten 9 ein ungewolltes gegenläufiges Verschieben der Wandelemente bzw. des Wandelements und des Wandendelements 11 unterbindet. Zudem können die mit Bezug auf Fig. 1 beschriebenen Nuten 4 Sicherungselemente 25 eingeschoben werden, die gleichzeitig als Rückwand des Regals dienen können.

Dadurch, dass die Wandelement 5 und die Wandendelemente 11 bzgl. einer durch die Höhenrichtung H und die Tiefenrichtung T definierten Ebene symmetrisch sind, kann mit nur drei Elementen das Regal aus Fig. 1 aufgebaut werden. Es besteht sogar grundsätzlich die Möglichkeit, auf die im beschriebenen Ausführungsbeispiel als Füße dienenden Wandendelemente 11 zu verzichten, so dass das Regal grundsätzlich aus nur zwei unterschiedlichen Elementen, nämlich den Bodenelementen 1 und den Wandelementen 5, aufgebaut werden kann. Die Wandendelemente 11 und die Sicherungselemente 25 stellen insofern lediglich nicht zwingend notwendige, aber vorteilhafte Ergänzungen dar.

### Bezugszeichenliste

- 1: Bodenelement
- 3: Durchgangsöffnung
- 4: Nut
- 5: Wandelement
- 7A,B: Endfläche
- 9: Hakenartiger Vorsprung
- 11: Wandendelement
- 13A,B: Endfläche
- 15: erster Hakenabschnitt
- 17: zweiter Hakenabschnitt
- 19: Grundkörper
- 21: freies Ende
- 23: Grundkörper
- 25: Sicherungselement

## Patentansprüche

1. Regalsystem mit Steckverbindung umfassend:
- Bodenelemente (1), die jeweils eine Breitenausdehnung entlang einer Breitenrichtung (B) und eine Tiefenausdehnung entlang einer zur Breitenrichtung (B) senkrecht verlaufenden Tiefenrichtung (T) besitzen und die jeweils wenigstens zwei Durchgangsöffnung (3) mit einer sich in Breitenrichtung des jeweiligen Bodenelementes erstreckenden Öffnungsbreite (b) und einer sich in Tiefenrichtung des jeweiligen Bodenelements erstreckenden Öffnungslänge (I) aufweisen, wobei die Durchgangsöffnungen in Breitenrichtung des jeweiligen Bodenelementes voneinander beabstandet sind, und
- Wandelemente (5), die jeweils eine Höhenausdehnung entlang einer Höhenrichtung (H), eine Tiefenausdehnung entlang einer zur Höhenrichtung (H) senkrechten Tiefenrichtung (T) und eine Breitenausdehnung entlang einer zur Höhenrichtung (H) und zur Tiefenrichtung (T) senkrechten Breitenrichtung (B) besitzen und die jeweils zwei an in Höhenrichtung (H) entgegengesetzten Enden gelegene Endflächen (7A, 7B) aufweisen,
wobei
- die Endflächen (7A, 7B) jedes Wandelements (5) hakenartige Vorsprünge (9) aufweisen, deren Hakenform in einer durch die Höhenrichtung (H) und die Tiefenrichtung (T) des jeweiligen Wandelements (5) definierten Ebene gegeben ist und deren Ausdehnung (a3) in Tiefenrichtung (T) des jeweiligen Wandelementes (5) höchstens dem Abstand (a1) zwischen zwei hakenartigen Vorsprüngen (9) entspricht, und
- die hakenartigen Vorsprünge (9) derart an den Endflächen (7A, 7B) angeordnet sind, dass die hakenartigen Vorsprünge (9) einander gegenüberliegender Endflächen (7A, 7B) zweier Wandelemente (5) formschlüssig miteinander in Eingriff bringbar sind,
wobei
- die Endflächen (7A, 7B) der Wandelemente (5) in Tiefenrichtung (T) des jeweiligen Wandelements (5) eine Ausdehnung aufweisen, die größer als die Öffnungslänge (I) der Durchgangsöffnungen (3) ist, und die hakenartigen Vorsprünge (9) von den in Tiefenrichtung (T) gesehenen Enden der Endfläche (7A, 7B) des jeweiligen Wandelements (5) beabstandet ist, **dadurch gekennzeichnet, dass**
- die Ausdehnung (a3) jeder der hakenartigen Vorsprünge (9) in Tiefenrichtung (T) des jeweiligen Wandelementes (5) jeweils im Wesentlichen dem Abstand (a1) zwischen zwei hakenartigen Vorsprüngen (9) in Tiefenrichtung (T) des jeweiligen Wandelementes (5) entspricht, und
- die Ausdehnung (b1) der hakenartigen Vorsprünge (9) in Breitenrichtung des jeweiligen Wandelements (5) der Öffnungsbreite (b) der Durchgangsöffnungen (3) der Bodenelemente (1) entspricht.

2. Regalsystem nach Anspruch 1, das außerdem Wandendelemente (11) umfasst, die jeweils eine Höhenausdehnung entlang einer Höhenrichtung (H), eine Tiefenausdehnung entlang einer zur Höhenrichtung (H) senkrechten Tiefenrichtung (T) und eine Breitenausdehnung entlang einer zur Höhenrichtung (H) und zur Tiefenrichtung (T) senkrechten Breitenrichtung (B) besitzen und die jeweils zwei an in Höhenrichtung (H) entgegengesetzten Enden gelegene Endflächen (13A, 13B) aufweisen, wobei lediglich eine der Endflächen (13A) jedes Wandendelements (11) hakenartige Vorsprünge (9) aufweist, deren Hakenform in einer durch die Höhenrichtung (H) und die Tiefenrichtung (T) des jeweiligen Wandendelements (11) definierten Ebene gegeben ist und deren Ausdehnung (a3) in Tiefenrichtung (T) des jeweiligen Wandendelementes (11) höchstens dem Abstand (a1) zwischen zwei hakenartigen Vorsprüngen (9) entspricht.

3. Regalsystem nach Anspruch 2, in dem die Endflächen (13A, 13B) der Wandendelemente (11) in Tiefenrichtung (T) des jeweiligen Wandendelements (11) eine Ausdehnung aufweisen, die größer als die Öffnungslänge (I) der Durchgangsöffnungen (3) ist, und die hakenartigen Vorsprünge (9) von den in Tiefenrichtung (T) gesehenen Enden der Endfläche (13A) des jeweiligen Wandendelements (11) beabstandet ist.

4. Regalsystem nach Anspruch 2 oder Anspruch 3, in dem die Ausdehnung (a3) der hakenartigen Vorsprünge (9) in Tiefenrichtung (T) des jeweiligen Wandendelements (11) im Wesentlichen dem Abstand (a1) zwischen zwei hakenartigen Vorsprüngen (9) in Tiefenrichtung (T) des jeweiligen Wandendelementes (11) entspricht.

5. Regalsystem nach einem der Ansprüche 2 bis 4, in dem die Ausdehnung (b1) der hakenartigen Vorsprünge (9) in Breitenrichtung des jeweiligen Wandendelements (11) der Öffnungsbreite (b) der Durchgangsöffnungen (3) der Bodenelemente (1) entspricht.

6. Regalsystem nach einem der Ansprüche 1 bis 5, in dem die Ausdehnung (b1) der hakenartigen Vorsprünge (9) in Breitenrichtung (B) des jeweiligen Wandelements (5) und/oder die Ausdehnung (b1) der hakenartigen Vorsprünge (9) in Breitenrichtung (B) des jeweiligen Wandendelements (11) kleiner als die Breitenausdehnung des jeweiligen Wandelements (5) bzw. des jeweiligen Wandendelements (11) ist bzw. sind.

7. Regalsystem nach einem der Ansprüche 1 bis 6, in dem die Wandelemente (5) und/oder der Wandendelemente (11) bezüglich einer durch die Höhenrichtung (H) und die Tiefenrichtung (T) des jeweiligen Wandelements (5) bzw. des jeweiligen Wandendelements (11) definierten Ebene symmetrisch ausgebildet sind.

8. Regalsystem nach einem der Ansprüche 1 bis 7, in dem die Wandelemente (5) bezüglich einer durch die Tiefenrichtung (T) und die Breitenrichtung (B) des jeweiligen Wandelements (5) definierten Ebene symmetrisch ausgebildet sind.

9. Regalsystem nach einem der Ansprüche 1 bis 8, in dem die Bodenelemente (1) jeweils eine Dicke in einer zur Breitenrichtung (B) und zur Tiefenrichtung (T) des jeweiligen Bodenelements (1) senkrecht verlaufenden Höhenrichtung (H) aufweisen und die Ausdehnung (h) der hakenartigen Vorsprünge (9) entlang der Höhenrichtung (H) der Wandelemente (5) bzw. der Wandendelemente (11) der Dicke der Bodenelemente (1) entspricht.

10. Regalsystem nach einem der Ansprüche 1 bis 9, in dem die hakenartigen Vorsprünge (9) der Wandelemente (5) und/oder die hakenartigen Vorsprünge (9) der Wandendelemente (11) jeweils einen von der jeweiligen Endfläche (7A, 7B, 13A) ausgehenden ersten Hakenabschnitt (15) sowie einen rechtwinklig zum ersten Hakenabschnitt (15) verlaufenden und sich an den ersten Hakenabschnitt in Höhenrichtung (H) des jeweiligen Wandelelements (5) bzw. des jeweiligen Wandendelements (11) anschließenden zweiten Hakenabschnitt (17) aufweisen, wobei der zweite Hakenabschnitt (17) eine Ausdehnung (a4) in Höhenrichtung (H) des jeweiligen Wandelements (5) bzw. des jeweiligen Wandendelements (11) aufweist, die im Wesentlichen dem Abstand (a2) des zweiten Hakenabschnitts (17) von der Endfläche (7A, 7B, 13A) des jeweiligen Wandelements (5) bzw. des jeweiligen Wandendelements (11) entspricht.

11. Regalsystem nach Anspruch 10, in dem die Ausdehnung (a3) des zweiten Hakenabschnitts (17) in Tiefenrichtung (T) des jeweiligen Wandelements (5) bzw. des jeweiligen Wandendelements (11) im Wesentlichen dem doppelten der Ausdehnung (a5) des ersten Hakenabschnitts (15) in Tiefenrichtung (T) des jeweiligen Wandelements (5) bzw. des jeweiligen Wandendelements (11 entspricht.

12. Regalsystem nach Anspruch 10 oder Anspruch 11, in dem die zweiten Hakenabschnitte (17) abgerundete freie Enden (21) besitzen.

## Claims

1. Shelving system with plug-in connection comprising:
- base elements (1), which in each case possess a width dimension along a width direction (B) and a depth dimension along a depth direction (T) running perpendicularly to the width direction (B) and which in each case has at least two through openings (3) with an opening width (b) extending in the width direction of the respective base element and an opening length (I) extending in the depth direction of the respective base element, wherein the through openings in the width direction of the respective base element are spaced apart from each other, and
- wall elements (5), which in each case possess a height dimension along a height direction (H), a depth dimension along a depth direction (T) perpendicular to the height direction(H) and a width dimension along a width direction (B) perpendicular to the height direction (H) and to the depth direction (T) and which in each case has two end faces (7A, 7B) placed on opposite ends in the height direction (H),
wherein
- the end faces (7A, 7B) of each wall element (5) have hook-like protrusions (9), the hook shape of which is formed in a plane defined by the height direction (H) and the depth direction (T) of the respective wall element (5) and whose dimension (a3) in the depth direction (T) of the respective wall element (5) at maximum corresponds to the distance (a1) between two hook-like protrusions (9), and
- the hook-like protrusions (9) are arranged at the end faces (7A, 7B) in such a manner that the hook-like protrusions (9) of end faces (7A, 7B), lying opposite each other, of two wall elements (5) can be positively engaged with one another, wherein
- the end faces (7A, 7B) of the wall elements (5) in the depth direction (T) of the respective wall element (5) have a dimension, which is greater than the opening length (I) of the through openings (3), and the hook-like protrusions (9) are spaced apart from the ends, seen in the depth direction (T), of the end face (7A, 7B) of the respective wall element (5), **characterized in that**
- the dimension (a3) of each of the hook-like protrusions (9) in the depth direction (T) of the respective wall element (5) in each case substantially corresponds to the distance (a1) between two hook-like protrusions (9) in the depth direction (T) of the respective wall element (5), and
- the dimension (b1) of the hook-like protrusions (9) in the width direction of the respective wall element (5) corresponds to the opening width (b) of the through openings (3) of the base elements (1).

2. Shelving system according to claim 1, that in addition comprises wall end elements (11), which in each case possesses a height dimension along a height direction (H), a depth dimension along a depth direction (T) vertical to the height direction (H) and a width dimension along a width direction (B) perpendicular to the height direction (H) and to the depth direction (T) and which in each case has two end faces (13A, 13B) placed on opposite ends in the height direction (H), wherein only one of the end faces (13A) of each wall end element (11) has hook-like protrusions (9), whose hook shape is formed in a plane defined by the height direction (H) and the depth direction (T) of the respective wall end element (11) and whose dimension (a3) in the depth direction (T) of the respective wall end element (11) at maximum corresponds to the distance (a1) between two hook-like protrusions (9).

3. Shelving system according to claim 2, in which the end faces (13A, 13B) of the wall end elements (11) in the depth direction (T) of the respective wall end element (11) has a dimension, which is greater than the opening length (I) of the through openings (3), and the hook-like protrusions (9) are spaced apart from the ends, seen in the depth direction (T), of the end face (13A) of the respective wall end element (11).

4. Shelving system according to claim 2 or claim 3, in which the dimension (a3) of the hook-like protrusions (9) in the depth direction (T) of the respective wall end element (11) substantially corresponds to the distance (a1) between two hook-like protrusions (9) in the depth direction (T) of the respective wall end element (11).

5. Shelving system according to any one of claims 2 to 4, in which the dimension (b1) of the hook-like protrusions (9) in the width direction of the respective wall end element (11) corresponds to the opening width (b) of the through openings (3) of the base elements (1).

6. Shelving system according to any one of claims 1 to 5, in which the dimension (b1) of the hook-like protrusions (9) in the width direction (B) of the respective wall element (5) and/or the dimension (b1) of the hook-like protrusions (9) in the width direction (B) of the respective wall end element (11) is smaller than the width dimension of the respective wall element (5) and/or the respective wall end element (11).

7. Shelving system according to any one of claims 1 to 6, in which the wall elements (5) and/or the wall end elements (11) are symmetrically formed with reference to a plane defined by the height direction (H) and the depth direction (T) of the respective wall element (5) and/or the respective wall end element (11).

8. Shelving system according to any one of claims 1 to 7, in which the wall elements (5) are symmetrically formed with reference to a plane defined by the depth direction (T) and the width direction (B) of the respective wall element (5).

9. Shelving system according to any one of claims 1 to 8, in which the base elements (1) in each case have a thickness in a height direction (H) running perpendicularly to the width direction (B) and to the depth direction (T) of the respective base element (1) and the dimension (h) of the hook-like protrusions (9) along the height direction (H) of the wall elements (5) and/or the wall end elements (11) corresponds to the thickness of the base elements (1).

10. Shelving system according to any one of claims 1 to 9, in which the hook-like protrusions (9) of the wall elements (5) and/or the hook-like protrusions (9) of the wall end elements (11) in each case have a first hook section (15) starting from the respective end face (7A, 7B, 13A) as well as a second hook section (17) running orthogonally to the first hook section (15) and adjoining the first hook section in the height direction (H) of the respective wall element (5) and/or the respective wall end element (11), wherein the second hook section (17) has a dimension (a4) in the height direction (H) of the respective wall element (5) and/or the respective wall end element (11), which substantially corresponds to the distance (a2) of the second hook section (17) from the end face (7A, 7B, 13A) of the respective wall element (5) and/or the respective wall end element (11).

11. Shelving system according to claim 10, in which the dimension (a3) of the second hook section (17) in the depth direction (T) of the respective wall element (5) and/or the respective wall end element (11) substantially corresponds to twice the dimension (a5) of the first hook section (15) in the depth direction (T) of the respective wall element (5) and/or the respective wall end element (11).

12. Shelving system according to claim 10 or claim 11, in which the second hook sections (17) possess rounded off free ends (21).

## Revendications

1. Système de rayonnage avec connexion enfichable comportant :
- des éléments de fond (1), qui possèdent une dimension en largeur le long d'une direction de largeur (B) et une dimension en profondeur le long d'une direction de profondeur (T) s'étendant perpendiculairement à la direction de largeur (B) et qui présentent au moins deux ouvertures traversantes (3) avec une largeur d'ouverture (b) s'étendant en direction de largeur de chaque élément de fond et une longueur d'ouverture (l) s'étendant en direction de profondeur de chaque élément de fond, où les ouvertures traversantes sont distantes les unes des autres en direction de largeur de chaque élément de fond, et
- des éléments de paroi (5), qui possèdent une dimension en hauteur le long d'une direction de hauteur (H), une dimension en profondeur le long d'une direction de profondeur (T) perpendiculaire à la direction de hauteur (H) et une dimension en largeur le long d'une direction de largeur (B) perpendiculaire à la direction de hauteur (H) et à la direction de profondeur (T) et qui présentent deux surfaces terminales (7A, 7B) situées aux extrémités opposées en direction de hauteur (H),
où
- les surfaces terminales (7A, 7B) de chaque élément de paroi (5) présentent des saillies (9) en forme de crochet, dont la forme de crochet est formée dans un plan défini par la direction en hauteur (H) et la direction en profondeur (T) de chaque élément de paroi (5) et dont la dimension (a3) en direction de profondeur (T) de chaque élément de paroi (5) correspond au maximum à la distance (a1) entre deux saillies (9) en forme de crochet, et
- les saillies (9) en forme de crochet sont agencées sur les surfaces terminales (7A, 7B) de sorte que les saillies (9) en forme de crochet de surfaces terminales (7A, 7B) se faisant face de deux éléments de paroi (5) peuvent être mutuellement en prise,
où
- les surfaces terminales (7A, 7B) des éléments de paroi (5) présentent une extension en direction de profondeur (T) de chaque élément de paroi (5), qui est supérieure à la longueur d'ouverture (l) des ouvertures traversantes (3), et les saillies (9) en forme de crochet sont distantes des extrémités en direction de profondeur (T) des surfaces terminales (7A, 7B), **caractérisé en ce que**
- la dimension (a3) de chaque saillie (9) en forme de crochet en direction de profondeur (T) de chaque élément de paroi (5) correspond essentiellement à la distance (a1) entre deux saillies (9) en forme de crochet en direction de profondeur (T) de chaque élément de paroi (5), et
- la dimension (b1) des saillies (9) en forme de crochet en direction de largeur (B) de chaque élément de paroi (5) correspond à la largeur d'ouverture (b) des ouvertures traversantes (3) de l'élément de fond (1) .

2. Système de rayonnage selon la revendication 1, qui comprend des éléments de paroi extérieurs (11), qui possèdent une dimension en hauteur le long d'une direction de hauteur (H), une dimension en profondeur le long d'une direction de profondeur (T) perpendiculaire à la direction de hauteur (H) et une dimension en largeur le long d'une direction de largeur (B) perpendiculaire à la direction de hauteur (H) et à la direction de profondeur (T) et qui présentent deux surfaces terminales (13A, 13B) situées aux extrémités opposées en direction de hauteur (H), où une des surfaces terminales (13A) de chaque élément de paroi (11) présente des saillies (9) en forme de crochet, dont la forme de crochet est formée dans un plan défini par la direction de hauteur (H) et la direction de profondeur (T) de chaque élément de paroi (11) et dont leur dimension (a3) en direction de profondeur (T) de chaque élément de paroi (11) correspond au maximum à la distance (a1) entre deux saillies (9) en forme de crochet.

3. Système de rayonnage selon la revendication 2, dans lequel les surfaces terminales (13A, 13B) des éléments de paroi (11) présentent en direction de profondeur (T) de chaque élément de paroi (11), une dimension qui est supérieure à la longueur d'ouverture (l) des ouvertures traversantes (3) et la saillie (9) en forme de crochet est distante des extrémités de la surface terminale (13A) de chaque élément de paroi (11), vue en direction de profondeur (T).

4. Système de rayonnage selon la revendication 2 ou 3, dans lequel la dimension (a3) de la saillie (9) en forme de crochet en direction de profondeur (T) de chaque élément de paroi (11) correspond essentiellement à la distance (a1) entre deux saillies (9) en forme de crochet en direction de profondeur (T) de chaque élément de paroi (11).

5. Système de rayonnage selon l'une des revendications 2 à 4, dans lequel la dimension (b1) des saillies (9) en forme de crochet en direction de largeur de chaque élément de paroi (11) correspond à la largeur d'ouverture (b) des ouvertures traversantes (3) de l'élément de fond (1).

6. Système de rayonnage selon l'une des revendications 1 à 5, dans lequel la dimension (b1) des saillies (9) en forme de crochet en direction de largeur (B) de chaque élément de paroi (5) et/ou la dimension (b1) des saillies (9) en forme de crochet en direction de largeur (B) de chaque élément de paroi (11) sont inférieures à la dimension en largeur de chaque élément de paroi (5), respectivement chaque élément de paroi (11).

7. Système de rayonnage selon l'une des revendications 1 à 6, dans lequel les éléments de paroi (5) et/ou les éléments de paroi (11) sont symétriques par rapport à un plan défini par la direction de hauteur (H) et la direction de profondeur (T) de chaque élément de paroi (5), et respectivement de chaque élément de paroi (11).

8. Système de rayonnage selon l'une des revendications 1 à 7, dans lequel les éléments de paroi (5) sont symétriques par rapport à un plan défini par la direction de profondeur (T) et la direction de largeur (B) de chaque élément de paroi (5).

9. Système de rayonnage selon l'une des revendications 1 à 8, dans lequel les éléments de fond (1) présentent une épaisseur en direction de hauteur (H) s'étendant perpendiculairement à la direction de largeur (B) et à la direction de profondeur (T) et la dimension (h) des saillies (9) en forme de crochet le long de la direction de hauteur (H) de l'élément de paroi (5) et respectivement, l'élément de paroi (11) correspond à l'épaisseur de l'élément de fond (1).

10. Système de rayonnage selon l'une des revendications 1 à 9, dans lequel la saillie (9) en forme de crochet de l'élément de paroi (5) et/ou la saillie (9) en forme de crochet de l'élément de paroi (11) présentent chacune, un premier segment de crochet (15) s'étendant de chaque surface terminale (7A, 7B, 13A), ainsi qu'un deuxième segment de crochet (17) s'étendant à angle droit par rapport au premier segment de crochet (15) et se raccordant au premier segment de crochet en direction de hauteur (H) de chaque élément de paroi (5) et respectivement, chaque élément de paroi (11), où le deuxième segment de crochet (17) présente une dimension (a4) en direction de hauteur (H) de chaque élément de paroi (5) et respectivement, chaque élément de paroi (11), qui correspond essentiellement à la distance (a2) du deuxième segment de crochet (17) depuis la surface terminale (7A, 7B, 13A) de chaque élément de paroi (5) et respectivement, chaque élément de paroi (11).

11. Système de rayonnage selon la revendication 10, dans lequel la dimension (a3) du deuxième segment de crochet (17) en direction de profondeur (T) de chaque élément de paroi (5) et respectivement, chaque élément de paroi (11), correspond essentiellement au double de la dimension (a5) du premier segment de crochet (15) en direction de profondeur (T) de chaque élément de paroi (5) et respectivement, chaque élément de paroi (11).

12. Système de rayonnage selon la revendication 10 ou 11, dans lequel le deuxième segment de crochet (17) possède une extrémité libre (21) arrondie.
